(19) Europäisches Patentamt
European Patent Office
Office européen des brevets

(11) **EP 1 989 510 B1**

(12) **FASCICULE DE BREVET EUROPEEN**

(45) Date de publication et mention
de la délivrance du brevet:
**02.06.2010 Bulletin 2010/22**

(51) Int Cl.:
***G01C 21/00*** *(2006.01)*     ***G01S 5/14*** *(2006.01)*
***G01C 21/16*** *(2006.01)*

(21) Numéro de dépôt: **07730967.2**

(22) Date de dépôt: **12.02.2007**

(86) Numéro de dépôt international:
**PCT/FR2007/000255**

(87) Numéro de publication internationale:
**WO 2007/099211 (07.09.2007 Gazette 2007/36)**

(54) **PROCÉDÉ ET DISPOSITIF DE POSITIONNEMENT HYBRIDE**

HYBRIDES POSITIONIERUNGSVERFAHREN UND VORRICHTUNG

HYBRID POSITIONING METHOD AND DEVICE

(84) Etats contractants désignés:
**DE GB IT**

(30) Priorité: **01.03.2006 FR 0601819**

(43) Date de publication de la demande:
**12.11.2008 Bulletin 2008/46**

(73) Titulaire: **EUROCOPTER**
**13725 Marignane Cédex (FR)**

(72) Inventeur: **PETILLON, Jean-Paul**
**F-13140 Miramas (FR)**

(74) Mandataire: **GPI & Associés**
**1330, rue Guillibert de la Lauzière**
**EuroParc de Pichaury, Bât B2**
**13856 Aix en Provence Cedex 3 (FR)**

(56) Documents cités:
**FR-A1- 2 866 423**     **US-A1- 2003 083 792**
**US-B1- 6 317 688**

**EP 1 989 510 B1**

**Description**

La présente invention est relative à un procédé et à un dispositif de positionnement hybride.

Le domaine technique de l'invention est celui de la fabrication de systèmes de navigation embarqués à bord d'hélicoptères.

La présente invention est en particulier relative à un procédé et à un dispositif de navigation et/ou positionnement qui combine des données de distances séparant un mobile porteur du dispositif - en particulier un giravion - de satellites, et des mesures inertielles.

Au sens de la présente demande, sauf indication -explicite ou implicite- contraire, les termes « mesure », « donnée », « signal », et leurs dérivés, sont considérés comme équivalents, et les termes « combiner », « hybrider », « coupler », et leurs dérivés, sont considérés comme équivalents.

Un récepteur GPS comporte généralement quatre blocs ou modules principaux :

- un premier module est une tête HF (ou « RF Front End ») pré amplifie des signaux captés par l'antenne du récepteur GPS, et réalise un changement de fréquence ;

- un second module est une horloge fournissant aux autres modules une référence précise de temps et de fréquence ; la précision de l'horloge n'étant pas absolue, on modélise les erreurs de temps et fréquence par des biais ;

- un troisième module de traitement du signal décode des messages de navigation en provenance des satellites, pour fournir les éphémérides de la constellation de 24 satellites ; ce premier type de données correspond à la mesure des 24 positions (ou vecteurs de dimension 3, $\vec{p}_{SVi}$ =[$x_{SVi}$ $y_{SVi}$ $z_{SVi}$]$^T$, i = 1 à 24) des satellites ; il s'agit en fait des données nécessaires au calcul (moyennant la connaissance précise du temps) de ces 24 positions ; ce module effectue en outre la mesure des durées de propagation des signaux en provenance des seuls satellites en vue et captés - dont le nombre NCH (« number of channels ») est variable- et le calcul des NCH distances correspondant respectivement aux durées de propagation mesurées ; le biais commun affectant ces mesures correspond au décalage de l'horloge et peut correspondre à plusieurs milliers de kilomètres ; on désigne généralement par « pseudo distances » les distances ainsi déterminées ; dans la présente demande, sauf indication -explicite ou implicite- contraire, les termes « distance » et « pseudo-distance » sont utilisés indifféremment pour désigner les données de distance délivrées par ce module du récepteur ; certains récepteurs fournissent également une mesure de la dérivée de ces quantités (« pseudo range rates ») ;

- un quatrième module de « calcul de la solution de navigation » résout le système d'équations :

$$r_i^2 = (x_i - x)^2 + (y_i - y)^2 + (z_i - z)^2 + Ct \quad (i=1 \ \text{à} \ NCH)$$

où $\vec{p}$=[$x$ $y$ $z$]$^T$ est la position de l'antenne, t est le décalage d'horloge et C la vitesse de la lumière : les inconnues étant au nombre de quatre (x, y, z, t), la résolution du système requiert quatre équations scalaires ; lorsque le nombre de canaux de réception du récepteur excède quatre, on utilise la surabondance de données pour diminuer l'erreur et augmenter l'intégrité en utilisant par exemple la méthode des moindres carrés et en détectant les points écartés de la tendance générale.

Ce dernier bloc délivre donc la position et le temps du récepteur corrigé de son bais, le cas échéant une mesure de la dérivée de la position du mobile, i.e. de la vitesse, du porteur.

Il est connu de combiner ces données de distance par rapport à des satellites, à des données inertielles délivrées par une centrale inertielle embarquée à bord du mobile, à l'aide d'un filtre de Kalman, pour positionner le mobile, comme décrit par exemple dans le document « GPS and INS integration with Kalman filtering for direct georeferencing of airborne imagery », ETH Hönggerberg, Zurich, Institute of Geodesy and Photogrammetry.

Par ailleurs, le document US 2003/083792 décrit un procédé de positionnement d'un mobile par combinaison de données de position dérivées d'un système de positionnement par satellite et de données inertielles, dans lequel on enregistre dans un registre temporaire les données de biais attachées aux données inertielles générées par des filtres récursifs à partir des données de vitesse et position satellitaires. Lorsqu'un défaut dans les données du système de positionnement par satellite est détecté, on utilise les données de biais enregistrées afin de corriger les erreurs induites par le défaut détecté.

On rappelle la signification de sigles usuels qui sont utilisés ci-après :

AAIM : surveillance autonome d'intégrité à bord (« Aircraft Autonomous Integrity Monitoring ») ;

ABAS : système d'amélioration (de renforcement) embarqué (« Aircraft Based Augmentation System ») ;

AFCS : système automatique de contrôle de vol (« Automatic Flight Control System ») ;

EGNOS : système européen de complément à la navigation géostationnaire (« European Geostationary Navigation Overlay System ») ;

FIFO : premier entré, premier sorti (« First In », « First Out ») ;

FMS : système de gestion de vol (« Flight Management System ») ;

GBAS : système d'amélioration au sol (« Ground Based Augmentation System ») ;

GNSS : système mondial de navigation par satellite (« Global Navigation Satellite System ») ;

GPS : système de positionnement mondial (« Global Positionning System ») ;

INS : système de navigation inertielle (« Inertial Navigation System ») ;

RAIM : contrôle autonome de l'intégrité par le récepteur (« Receiver Autonomous Integrity Monitoring ») ;

SBAS : système de renfort satellitaire (« Space-Based Augmentation System ») ;

TTA : temps pour alerter (« Time to Alert ») ;

PVT : position - vitesse - temps (« Position - Velocity - Time ») ;

VCO : oscillateur commandé en tension (« Voltage Controlled Oscillator ») ;

WAAS : Système d'amélioration à couverture étendue (« Wide Area Augmentation System »).

L'invention a notamment pour objet de permettre la passivation de pannes d'un GNSS et le fonctionnement en mode survie d'un système hybride GNSS/INS de positionnement et/ou de navigation.

Parmi les systèmes de navigation basés sur des satellites, après le système satellitaire « Transit » des années 1970, qui permettait de faire un point - d'une précision kilométrique - toutes les 90 minutes, apparut le système de navigation GPS, qui émet des signaux « en clair » (signaux C/A, ou « Coarse Acquisition »).

Une limitation importante de ce système est son manque d'intégrité. D'une part le taux de panne d'un satellite est de l'ordre de $10^{-4}$ $h^{-1}$. D'autre part les satellites GPS ne communiquent pas entre eux et ne se surveillent donc pas mutuellement. Enfin le segment sol du système GPS n'est pas assez dense pour assurer une surveillance continue de la constellation. Le taux de panne est donc élevé et le temps de signalisation des pannes à l'utilisateur final peut atteindre plusieurs heures. Ces deux caractéristiques rendent le GPS inutilisable en l'état dans des applications telles que le positionnement d'un aéronef civil en conditions de vol aux instruments « IFR ».

Un RAIM, tablant sur la redondance des satellites en vue, n'offre qu'un remède partiel à cette situation. Lorsque 5 satellites au moins sont captés et traités par un récepteur RAIM, le récepteur peut élaborer plusieurs solutions PVT, les comparer entre elles et, dans le cas où une dissemblance est détectée, signaler l'anomalie à l'utilisateur. Si plus de 5 satellites sont traités, le récepteur peut localiser et exclure un satellite en panne.

L'inconvénient est que ce type de surveillance aboutit à des rayons de protection qui ne permettent pas de faire des approches de précision, et des rayons d'alerte de plusieurs centaines de mètres.

Les systèmes SBAS ont pour vocation de pallier ces limitations, au moins en partie. Un système SBAS comporte un réseau continental de stations sol qui surveillent la partie visible de la constellation GPS. Le traitement en temps réel des données collectées par ce réseau permet d'identifier les erreurs de chacun des satellites GPS visibles, d'identifier les erreurs dues au retard de propagation ionosphérique en chaque point avec une résolution spatiale suffisante pour permettre une approche de précision en tout lieu du continent considéré, et de détecter les pannes des satellites GPS.

Un segment spatial constitué de satellites géostationnaires peut servir de relais pour transmettre les informations de correction et d'état de santé de la constellation GPS aux récepteurs des utilisateurs finaux ; ces satellites géostationnaires servent aussi de source de données de navigation supplémentaires, puisqu'ils transmettent des messages de navigation identiques à ceux des satellites GPS.

Ces améliorations et compléments permettent d'atteindre une précision métrique (en trois dimensions), des rayons de protection « à $10^{-7}$ » décamétriques (le seuil de 20 mètres de protection verticale est disponible 99,9% du temps), et un délai de détection et de signalisation TTA des pannes au maximum égal à 6 secondes selon la norme Do 229.

Du fait de la dimension continentale du dispositif ainsi que des limitations de bande passante des signaux transmis par les satellites géostationnaires, le traitement et le transfert des informations ne peuvent pas être instantanés.

Le délai TTA de détection d'une panne et sa signalisation à l'utilisateur final constitue l'un des facteurs de coût d'un système SBAS.

Le document « GNSS Local component Integrity Concepts », Charles S. Dixon, Journal of Global Positioning Systems, 2003, volume 2, n°2, page 126-134 traite de moyens pour réduire la durée de ce délai.

Une valeur de TTA de 6 secondes est un maximum acceptable pour un aéronef, dont le taux de virage (vitesse de variation de cap) n'excède pas 3 degrés/seconde environ et dont la vitesse de variation de l'angle de roulis est limitée à 4°/s environ.

Par contre, un hélicoptère en approche à forte pente et à faible vitesse d'avancement est beaucoup moins stable qu'un gros porteur évoluant à 150 noeuds sur une pente ILS à 3°. Il est donc nécessaire sur un hélicoptère de mettre en place des lois de pilotages avec des autorités bien plus élevées que celles imposées par les limitations à 4°/s et 3°/s d'un avion de ligne, ce qui n'est pas compatible avec les valeurs de TTA usuelles.

Ainsi, les SBAS (WAAS ou EGNOS), qui pourraient être une source utile de données de navigation pour les giravions et les drones notamment, ne sont pas adaptés à ce type d'aéronef.

La présente invention répond à cette problématique en permettant notamment une passivation des pannes des satellites GPS détectées par le SBAS, une réduction jusqu'à zéro du retard à la détection et à la signalisation des pannes (TTA), et un mode de survie en cas de perte complète du SBAS.

Un autre objectif de l'invention est de proposer un système embarqué ou embarquable à bord d'un aéronef pour son positionnement par hybridation de pseudo-distances et d'autres mesures, en particulier des mesures inertielles, qui soit amélioré et/ou qui remédie, en partie au moins, aux lacunes ou inconvénients des systèmes de ce type.

Selon un aspect de l'invention, il est proposé d'enregistrer temporairement les données de positionnement satellitaire, avant leur délivrance à un module d'hybridation de ces données avec des données de positionnement non satellitaire, et de modifier, lors de la détection d'un signal de défaut, au moins une partie de ces données temporairement enregistrées.

Selon un autre aspect de l'invention, il est proposé un procédé de positionnement d'un aéronef par combinaison de données de distances ($\vec{r}_m$) séparant l'aéronef de satellites et de données inertielles ($\vec{u}$), dans lequel :

a) on enregistre dans une mémoire FIFO les données de distance pour disposer, en sortie de la mémoire, de données de distance retardées,

b) on combine les données de distances retardées aux données inertielles pour obtenir une estimation de données de position de l'aéronef,

c) on surveille l'apparition d'un défaut dans les données de distances et lorsqu'un tel défaut est détecté, on modifie une partie au moins des données enregistrées dans la mémoire FIFO pour les neutraliser (passiver), i.e. diminuer ou annuler leur poids - ou contribution - dans l'opération de combinaison.

Selon des caractéristiques avantageuses du procédé :

- on peut enregistrer des estimations ($\vec{r}$) de données de distance aux satellites en fonction des données inertielles, dans une seconde mémoire FIFO (13) pour disposer en sortie de cette mémoire d'estimations retardées, les capacités des deux mémoires FIFO étant équivalentes de sorte que la valeur du plus grand retard des estimations retardées est identique à la valeur du plus grand retard des données de distance retardées ;

- l'opération de combinaison peut comporter une opération de correction comportant la soustraction d'estimations retardées des données de distance en fonction des données inertielles, aux données de distance retardées, et la pondération - le filtrage - du résultat de cette soustraction, dont le gain (K) peut être constant ou variable ; le gain peut être calculé en fonction de la covariance (R) à priori des erreurs affectant les données de distance ;

- la valeur de plus grand retard peut être de l'ordre de 1 à 6 secondes ;

- les opérations d'enregistrement et de combinaison peuvent être effectuées (à intervalles de temps réguliers) selon une fréquence de l'ordre de 0,5 Hz au moins, en particulier de l'ordre de 0,5 Hz à 5 Hz ou de l'ordre de 1 Hz à 10 Hz ;

- chaque mémoire FIFO peut permettre d'enregistrer plusieurs vecteurs successifs de données $(\overset{\rightharpoonup}{r}_m, \overset{\rightharpoonup}{r})$, en particulier de l'ordre d'une dizaines de vecteurs au moins ; chaque vecteur $(\overset{\rightharpoonup}{r}_m)$ de données de distance comporte généralement, pour chaque canal de réception (i.e. chaque satellite), une mesure de pseudo distance ainsi que la variance de l'erreur affectant cette mesure ;

- pour neutraliser des données enregistrées dans la première mémoire FIFO, on peut diminuer la confiance associée à ces données, c'est-à-dire diminuer ou annuler l'inverse de la matrice de covariance des erreurs, et/ou augmenter (en particulier fixer à une valeur très élevée) la covariance des erreurs associées à ces données.

Selon un autre aspect de l'invention, il est proposé un dispositif embarqué ou embarquable de positionnement pour aéronef qui comporte :

- une unité inertielle délivrant des données inertielles,

- une unité de réception de distances satellitaires délivrant des données de distances,

- une unité d'hybridation reliée à l'unité inertielle pour recevoir les données inertielles et reliée à l'unité de réception de distances satellitaires pour recevoir les données de distances, l'unité d'hybridation délivrant des données de position estimée en fonction des données inertielles et des données de distances,

- une mémoire FIFO couplée avec (insérée entre) l'unité de réception de distances et l'unité d'hybridation pour délivrer à l'unité d'hybridation des données retardées de distance, et

- une unité de neutralisation sensible à une donnée de défaut des données de distance et arrangée pour modifier, en présence de cette donnée de défaut, une partie au moins des données de distance enregistrées dans la mémoire.

Selon des caractéristiques avantageuses du dispositif :

- l'unité d'hybridation peut comporter :

  - une unité d'estimation délivrant des estimées de distance qui sont calculées à partir des données inertielles, des données de position estimées du récepteur, et des données de position des satellites (éphémérides),

  - une seconde mémoire FIFO arrangée pour enregistrer les estimées de distance et pour délivrer en sortie des données retardées d'estimées de distance,

  - une unité de correction comportant une unité de soustraction arrangée pour soustraire les données retardées d'estimées de données de distance aux données retardées de distance délivrées par la première mémoire FIFO, et

  - un opérateur à gain (K) arrangé pour pondérer les données fournies par l'unité de soustraction ;

- l'unité d'hybridation peut comporter un filtre récursif, en particulier un filtre de Kalman ;

- l'unité de neutralisation peut être reliée à l'unité de réception de distances pour en recevoir les données de défaut.

L'invention peut être mise en oeuvre par un processeur d'un calculateur embarqué ou embarquable à bord d'un aéronef, qui exécute, lors de la détection d'un défaut un programme comportant des instructions correspondant aux étapes du procédé selon l'invention.

Ainsi, selon un aspect de l'invention, il est proposé un programme comportant un code utilisable par un calculateur d'un aéronef pour positionner l'aéronef par combinaison de données de distances $(\overset{\rightharpoonup}{r}_m)$ séparant l'aéronef de satellites et de données inertielles $(\overset{\rightharpoonup}{u})$, le code comprenant :

a) l'enregistrement dans une mémoire FIFO des données de distance pour disposer en sortie de la mémoire de données de distance retardées,

b) la combinaison des données de distances retardées aux données inertielles pour obtenir une estimation $(\overset{\rightharpoonup}{x})$ de données de position de l'aéronef,

c) la surveillance de l'apparition d'un défaut (SV #i) dans les données de distances et lorsqu'un tel défaut est détecté, la modification d'une partie au moins des données enregistrées dans la mémoire FIFO pour diminuer ou annuler leur poids dans l'opération de combinaison,

d) l'enregistrement des estimations ($\vec{\hat{r}}$) de données de distance aux satellites en fonction des données inertielles, dans une seconde mémoire FIFO pour disposer en sortie de cette mémoire d'estimations retardées, les capacités des deux mémoires FIFO étant équivalentes de sorte que la valeur du plus grand retard des estimations retardées est identique à la valeur du plus grand retard des données de distance retardées.

L'invention permet de passiver des pannes du récepteur GPS au même titre que les pannes des satellites, ce qui autorise une durée de cycle de test intégré (« built-in test ») du récepteur plus longue, et peut éviter l'installation d'un second récepteur.
D'autres aspects, caractéristiques, et avantages de l'invention apparaissent dans la description suivante, qui se réfère aux dessins annexés et qui illustre, sans aucun caractère limitatif, des modes préférés de réalisation de l'invention.

La figure 1 illustre schématiquement la structure d'un second registre d'un système selon l'invention, et ses connections avec les autres modules du système.

La figure 2 illustre schématiquement l'architecture d'un dispositif ou système conventionnel d'hybridation GPS / Inertie comportant un filtre de Kalman.

La figure 3 est un schéma bloc d'un module de calcul du gain du filtre et de calcul de la covariance, dans un système d'hybridation conventionnel.

La figure 4 illustre schématiquement l'architecture d'un dispositif ou système d'hybridation GPS / Inertie conforme à l'invention.

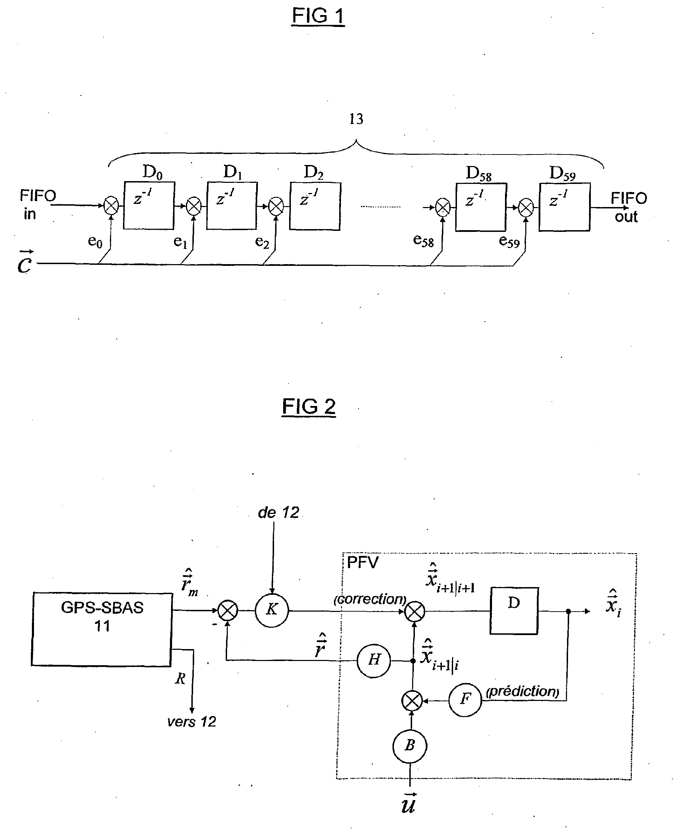

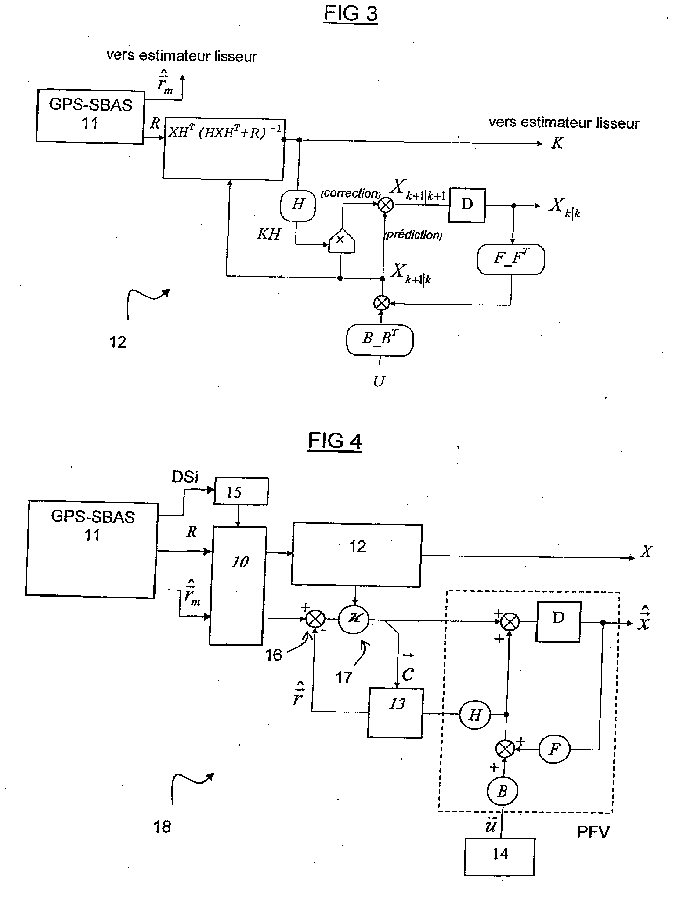

L'invention est basée sur la mise en quarantaine des mesures effectuées par le récepteur GPS-SBAS, pendant une durée suffisante pour garantir qu'elles ne sont pas erronées (i.e. pendant 6 secondes pour un SBAS conforme au standard Do229). Cette mise en quarantaine est effectuée par un' registre 10 à décalage (ou mémoire FIFO) intercalé (e) entre la sortie du récepteur 11 GPS-SBAS et le filtre de Kalman 12 (cf. figure 4).
Etant donné qu'il n'est pas envisagé de piloter l'aéronef sur la base d'informations « vieilles » de 6 secondes, le dispositif réalise une hybridation des mesures GPS-SBAS avec des mesures inertielles. Grâce à la mise en place d'un second registre 13 à décalage (ou mémoire FIFO) pour retarder les données inertielles de la même durée que les données GPS-SBAS, on dispose, en amont du second registre, de données hybrides inertie/distance (composantes du vecteur $\vec{\hat{x}}$) ne présentant aucun retard. En outre, le second registre à décalage est considéré en tant que machine à états, de manière que le récepteur GPS-SBAS constitue un observateur dynamique particulier auquel on applique la technique du filtre de Kalman.
Le dispositif illustré figure 4 comporte deux registres à décalage : un premier registre 10 pour les données GPS, et un second registre 13 pour les données inertielles ; le second registre est équipé d'entrées intermédiaires $e_0$ - $e_{59}$ qui permettent au filtre de Kalman de piloter (par un vecteur $\underline{c}$) tous les états du registre, comme illustré schématiquement figure 1 où les soixante blocs $D_0$ - $D_{59}$ marqués $z^{-1}$ sont des opérateurs de retard élémentaire constituant chacun autant d'états.
La figure 2 illustre schématiquement l'architecture d'un dispositif ou système conventionnel d'hybridation GPS / Inertie comportant un filtre de Kalman.
Le système comporte une représentation synthétique d'une plateforme virtuelle (PFV), où :

- $\vec{u}$ est la mesure inertielle (i.e. la collection des 2 vecteurs 3D des mesures d'accélération $\vec{\gamma}_m$ et de vitesse angulaire $\vec{\omega}_m$ de l'aéronef en repère porteur) ;

- l'opérateur marqué « z-1 » ou « D » est un opérateur de retard élémentaire ; cet opérateur agissant sur un vecteur correspond à $\underline{n}$ opérateurs de retard scalaire ;

- F, H et B sont des matrices caractéristiques de la plateforme virtuelle (les matrices de sa représentation d'état); le calcul de la matrice H fait intervenir les positions de chacun des satellites ;

- $\vec{\hat{x}}$ est l'estimé du vecteur d'état du processus, i.e. au minimum la collection des 3 angles d'Euler, des 3 composantes de vitesse, des 3 composantes de position et du biais de l'horloge du récepteur GPS. Usuellement $\vec{\hat{x}}$ comporte également des états markoviens correspondant à la modélisation des erreurs des gyromètres, des accéléromètres et du VCO : par exemple 2 états supplémentaires par axe et par senseur pour modéliser le biais et le bruit en 1/f, conduisant à un vecteur $\vec{\hat{x}}$ d'une dimension totale de 24 ;

- $\vec{\hat{r}}$ le vecteur des estimés des pseudo distances aux satellites.

Bien qu'une plateforme virtuelle ne soit pas un processus linéaire, cette représentation est valable pour les erreurs affectant les mesures, seules quantités qui intéressent une hybridation optimale.

Cette représentation montre que la plateforme virtuelle reçoit en entrée 6 mesures inertielles « strap-down », délivre en sortie un estimé du vecteur d'état du porteur, et qu'elle peut être linéarisée localement.

Les autres éléments illustrés sur ce schéma sont :

- K, le gain de Kalman ; et
- $\vec{\hat{r}}_m$ le vecteur des mesures des pseudo distances aux satellites (ces mesures sont issues du récepteur GPS-SBAS).

Ce schéma traduit les équations suivantes :

$$\hat{\vec{x}}_{i+1|i} = F\hat{\vec{x}}_i + B\bar{u} \qquad \text{(prédiction)}$$

$$\hat{\vec{x}}_{i+1|i+1} = K\left(\hat{\vec{r}}_m - H\hat{\vec{x}}_{i+1|i}\right) \qquad \text{(correction)}$$

$$\hat{\vec{r}} = H\ \hat{\vec{x}}_{i+1}$$

Si les erreurs affectant les mesures de pseudo distance et les mesures inertielles sont des bruits blancs, si R est la matrice de covariance des erreurs affectant les mesures des pseudo distances, et si U est la matrice de covariance des erreurs affectant les mesures inertielles, alors le gain de Kalman K et la matrice de covariance X de l'erreur affectant l'estimé $\vec{\hat{x}}$ de l'état du porteur sont déterminés par le système suivant d'équations récurrentes non linéaires :

$$X_{k+1|k} = FX_{k|k}F^T + BUB^T$$

$$K = X_{k+1|k}H^T\left(H\ X_{k+1|k}H^T + R\right)^{-1}$$

$$X_{k+1|k+1} = \left(I - KH\right)X_{k+1|k}$$

Le schéma correspondant à ce système est illustré figure 3.

Une représentation d'un système d'hybridation selon l'invention avec « mise en quarantaine » des observations, est illustré figure 4.

Le fonctionnement du filtre est fondé sur le caractère borné du délai de détection de panne du dispositif de mesure, ici le système GPS-SBAS. Il est par exemple de 6 secondes au maximum pour un système SBAS conforme à Do229.

Pour éviter toute pollution de la PFV par des mesures GPS-SBAS erronées, les mesures des pseudo distances et les estimations a priori de leurs variances, calculées par le récepteur GPS-SBAS, sont « mises en quarantaine » dans le registre 10 à décalage comprenant le nombre n d'étages requis pour que le temps de traversée de ce registre coïncide avec le (ou soit légèrement supérieur au) délai de détection maximum spécifié ; on choisit par exemple un registre de soixante étages (6 x 10 = 60) pour un récepteur GPS/SBAS délivrant des données à une fréquence de 10 Hz et dont le TTA est de 6s.

En cas de détection d'une panne d'un satellite Si matérialisée par un signal DSi (figure 4), toutes les mesures de pseudo distance issues de ce satellite, contenues dans les étages du registre à décalage 10 de sortie du récepteur 11, sont marquées invalides (i.e. leur variance est forcée à une valeur infinie) par le module 15 de neutralisation recevant le signal DSi.

Ces mesures à variance infinie sont ainsi ignorées par le filtre 12, qui continue dans le même temps à exploiter les mesures des autres satellites et à fournir une mesure de position valide dont la précision sera nominale (ou à peine dégradée si le nombre de satellites restants est suffisant).

Après disparition du signal DSi, le temps - par ex. 1 seconde - au bout duquel les données valides sortent de la mémoire, dépend de la profondeur (nombre d'étages) du registre 10 et de la fréquence d'itération des calculs.

En cas de panne complète du système de positionnement (y compris dans le cas d'une panne du récepteur), toutes les données de tous les satellites sont marquées invalides et le filtre, n'utilisant plus aucune observation, fournit une position inertielle pure (fonctionnement en boucle ouverte) sans avoir été pollué.

Le filtre optimal se déduit en appliquant la règle connue qu'il doit constituer une simulation en ligne du processus et de ses moyens d'observation. On prévoit donc, à la sortie de la PFV, le second registre 13 à décalage symétrique du registre (10) placé en sortie du récepteur GPS-SBAS. Les étages de ce registre à décalage constituent autant d'états supplémentaires du filtre de Kalman (6 x 12=72 états dans le cas d'un récepteur GPS 12 canaux fournissant ses mesures à 1Hz et pour un TTA de 6 secondes). Ces états doivent être pilotés par le filtre, d'où le bouclage (***vecteur c***) - après le gain K dans le schéma bloc figure 4 - vers le registre à décalage 13.

La relation entre deux états successifs (correspondant à deux itérations d'indice $\underline{k}$ et $(\underline{k+1})$) d'un registre à décalage dont l'entrée est notée e et la sortie est notée $\underline{s}$, peut s'écrire sous la forme :

$$\begin{pmatrix} d_0 \\ d_1 \\ \dots \\ d_{n-2} \\ d_{n-1} \end{pmatrix}_{k+1} = \begin{pmatrix} e \\ d_0 \\ \dots \\ d_{n-3} \\ d_{n-2} \end{pmatrix}_k = \begin{pmatrix} 0 & 0 & \dots & 0 & 0 \\ 1 & 0 & \dots & 0 & 0 \\ \dots & \dots & \dots & \dots & \dots \\ 0 & 0 & \dots & 0 & 0 \\ 0 & 0 & \dots & 1 & 0 \end{pmatrix} \begin{pmatrix} d_0 \\ d_1 \\ \dots \\ d_{n-2} \\ d_{n-1} \end{pmatrix}_k + \begin{pmatrix} 1 \\ 0 \\ \dots \\ 0 \\ 0 \end{pmatrix} e$$

$$s = \begin{pmatrix} 0 & 0 & \dots & 0 & 1 \end{pmatrix} \begin{pmatrix} d_0 \\ d_1 \\ \dots \\ d_{n-2} \\ d_{n-1} \end{pmatrix}_{k+1}$$

Ou, de manière plus synthétique :

$$\vec{d}_{k+1} = F_F \, \vec{d}_k + B_F \, e$$

$$s = H_F \vec{d}_{k+1}$$

où $F_F$, $B_F$ et $H_F$ sont les matrices d'interconnexion, constituées essentiellement de « 0 » et de quelques « 1 », ces derniers correspondant aux liaisons entre l'entrée « générale » du registre à décalage et l'entrée du premier étage du registre d'une part, entre la sortie d'un étage et l'entrée du suivant d'autre part, et enfin entre la sortie du dernier étage du registre et la sortie « générale du registre à décalage.

On peut transcrire la plateforme équipée de son registre à décalage par les équations :

$$\begin{bmatrix} \hat{\bar{x}}_{k+1} \\ \bar{d}_{k+1} \end{bmatrix} = \begin{bmatrix} F & 0 \\ B_F.HF & F_F \end{bmatrix} \begin{bmatrix} \hat{\bar{x}}_k \\ \bar{d}_k \end{bmatrix} + \begin{bmatrix} B \\ B_F.HB \end{bmatrix} \vec{u}$$

$$\hat{\bar{r}}_d = \begin{bmatrix} 0 & H_F \end{bmatrix} \begin{bmatrix} \hat{\bar{x}}_k \\ \bar{d}_k \end{bmatrix}$$

En posant :

$$\hat{\bar{x}} = \begin{bmatrix} \hat{\bar{x}} \\ \bar{d} \end{bmatrix}, \qquad \boldsymbol{\mathcal{F}} = \begin{bmatrix} F & 0 \\ B_F.HF & F_F \end{bmatrix}, \qquad \boldsymbol{\mathcal{B}} = \begin{bmatrix} B \\ B_F.HB \end{bmatrix} \text{ et } \boldsymbol{\mathcal{H}} = \begin{bmatrix} 0 & H_F \end{bmatrix},$$

on aboutit à la formulation:

$$\hat{\bar{x}}_{k+1} = \boldsymbol{\mathcal{F}}\, \hat{\bar{x}}_k + \boldsymbol{\mathcal{B}}\, \vec{u}$$

$$s = \boldsymbol{\mathcal{H}}\, \hat{\bar{x}}_k$$

que l'on peut traiter comme n'importe quel filtre de Kalman.

Dans un procédé selon l'invention, la dimension des vecteurs et matrices à calculer ou utiliser est augmentée. Par exemple, pour un récepteur GPS fournissant douze composantes de position à 1 Hz, avec un TTA de 6s, on obtient 12x6x1 = 72 états supplémentaires. Ainsi, le filtre mis en oeuvre selon l'invention peut comporter plusieurs dizaines ou centaines d'états.

Cependant, grâce au fait que les matrices manipulées sont essentiellement « creuses », il n'est généralement pas nécessaire de prévoir une mémoire pour tous ces d'éléments, ni de traiter systématiquement tous les éléments des matrices et des vecteurs.

Le couplage inertie/GPS peut être serré ou lâche ; pour un couplage lâche, on peut utiliser les données de position délivrées par le récepteur GPS, le cas échéant complétées par les données de vitesse ; pour un couplage serré, on peut utiliser les données de pseudo distance délivrées par le récepteur GPS, le cas échéant complétées par les données de pseudo vitesse.

Le système selon l'invention peut comporter un capteur d'altitude barométrique, un magnétomètre et/ou un capteur de vitesse air, ainsi que des moyens d'hybridation pour combiner les mesures délivrées par ces capteurs avec les mesures de distance satellitaires, et le cas échéant avec les mesures inertielles. On peut alors combiner aux données de positionnement satellitaire, des mesures de vitesse de l'aéronef dans (par rapport à) l'air, des mesures de cap et/ou de champ magnétique, et/ou des mesures d'altitude et/ou de pression barométrique.

**Revendications**

1. Procédé de positionnement d'un mobile par combinaison de données de distances $(\hat{\bar{r}}_m)$ séparant le mobile de satellites et de données inertielles $(\vec{u})$,
   **caractérisé en ce que** :

   a) on enregistre dans une mémoire FIFO (10) les données de distance pour disposer en sortie de la mémoire

de données de distance retardées,

b) on combine les données de distances retardées aux données inertielles pour obtenir une estimation ($\hat{x}$) de données de position du mobile,

c) on surveille l'apparition d'un défaut (DSi) dans les données de distances et lorsqu'un tel défaut est détecté, on modifie une partie au moins des données enregistrées dans la mémoire FIFO pour diminuer ou annuler leur poids dans l'opération de combinaison.

**2.** Procédé selon la revendication 1, dans lequel on enregistre des estimations ($\hat{r}$) de données de distance aux satellites en fonction des données inertielles et des éphémérides des satellites, dans une seconde mémoire FIFO (13) pour disposer en sortie de cette mémoire d'estimations retardées, les capacités des deux mémoires FIFO étant équivalentes de sorte que la valeur du plus grand retard des estimations retardées est identique à la valeur du plus grand retard des données de distance retardées.

**3.** Procédé selon la revendication 2 dans lequel l'opération de combinaison comporte la soustraction d'estimations retardées des données de distance en fonction des données inertielles aux données de distance retardées, et la pondération du résultat de cette soustraction.

**4.** Procédé selon la revendication 3 dans lequel le gain (K) de la pondération est constant.

**5.** Procédé selon la revendication 3 dans lequel le gain (K) de la pondération est variable.

**6.** Procédé selon la revendication 5 dans lequel le gain de la pondération est calculé en fonction de la covariance à priori (R) des erreurs affectant les données de distance, et en fonction de la géométrie de la constellation.

**7.** Procédé selon l'une quelconque des revendications 2 à 6 dans lequel la valeur de plus grand retard est de l'ordre de 1 à 6 secondes.

**8.** Procédé selon l'une quelconque des revendications 1 à 7, dans lequel les opérations d'enregistrement et de combinaison sont effectuées à intervalles de temps réguliers, selon une fréquence de l'ordre de 0,5 ou 1 Hz au moins.

**9.** Procédé selon les revendications 7 et 8 dans lequel chaque mémoire FIFO permet d'enregistrer plusieurs vecteurs - ou dizaines de vecteurs - successifs de données ($\vec{r}_m$, $\vec{r}$), chaque vecteur ($\vec{r}_m$) de données de distance comportant, pour chaque canal de réception, i.e. chaque satellite, une mesure de pseudo distance ainsi que la variance de l'erreur affectant cette mesure.

**10.** Procédé selon l'une quelconque des revendications 1 à 9 dans lequel pour neutraliser des données enregistrées dans la première mémoire FIFO, on diminue la confiance associée à ces données en particulier en augmentant la covariance des erreurs associées à ces données.

**11.** Dispositif (18) embarqué ou embarquable de positionnement d'un aéronef qui comporte :

- une unité (14) inertielle délivrant des données inertielles ($\vec{u}$),
- une unité (11) de réception de distances satellitaires et d'éphémérides délivrant des données de distances et/ou de position ($\vec{r}_m$) de l'unité (11),
- une unité (12, 13, 16, 17, PFV) d'hybridation reliée à l'unité inertielle pour recevoir les données inertielles et reliée à l'unité de réception de distances satellitaires pour recevoir les données de distances, l'unité d'hybridation délivrant des données ($\hat{x}$) de position estimée en fonction des données inertielles et des données de distances,

le dispositif étant **caractérisé en ce qu'**il comporte en outre :

- une mémoire FIFO (10) couplée avec - insérée entre - l'unité (11) de réception de distances et l'unité d'hybridation, pour délivrer à l'unité d'hybridation des données retardées de distance, et
- une unité (15) de neutralisation sensible à une donnée (DSi) de défaut des données de distance issues d'un satellite (Si) en défaut, et arrangée pour modifier, en présence de cette donnée de défaut, une partie au moins des données de distance enregistrées dans la mémoire.

**12.** Dispositif selon la revendication 11 dans lequel l'unité d'hybridation comporte:

- une unité d'estimation délivrant des données d'estimées de donnés de distance qui sont calculées à partir des données inertielles et des données de position estimées,
- une seconde mémoire FIFO (13) arrangée pour enregistrer les données d'estimées de données de distance et pour délivrer en sortie des données retardées d'estimées de données de distance,
- une unité (16) de soustraction arrangée pour soustraire les données retardées d'estimées de données de distance aux données retardées de distance délivrées par la première mémoire FIFO, et
- une unité (17) de pondération arrangée pour pondérer les données fournies par l'unité de soustraction.

13. Dispositif selon la revendication 11 ou 12 dans lequel l'unité d'hybridation comporte un filtre récursif (12).

14. Dispositif selon la revendication 13 dans lequel le filtre récursif est un filtre de Kalman.

15. Dispositif selon l'une quelconque des revendications 11 à 14 dans lequel l'unité (15) de neutralisation est reliée à l'unité (11) de réception de distances pour en recevoir les données de défaut.

16. Programme comportant un code utilisable par un calculateur d'un mobile pour positionner le mobile par combinaison de données de distances ($\vec{r}_m$) séparant le mobile de satellites et de données inertielles ($\vec{u}$), **caractérisé en ce que** :

a) on enregistre dans une mémoire FIFO (10) les données de distance pour disposer en sortie de la mémoire de données de distance retardées,
b) on combine les données de distances retardées aux données inertielles pour obtenir une estimation ($\vec{x}$) de données de position du mobile,
c) on surveille l'apparition d'un défaut (DSi) dans les données de distances et lorsqu'un tel défaut est détecté, on modifie une partie au moins des données enregistrées dans la mémoire FIFO pour diminuer ou annuler leur poids dans l'opération de combinaison,

et dans lequel on enregistre des estimations ($\vec{r}$) de données de distance aux satellites en fonction des données inertielles, dans une seconde mémoire FIFO (13) pour disposer en sortie de cette mémoire d'estimations retardées, les capacités des deux mémoires FIFO étant équivalentes de sorte que la valeur du plus grand retard des estimations retardées est identique à la valeur du plus grand retard des données de distance retardées.

17. Programme utilisable par un calculateur d'un mobile pour positionner le mobile, **caractérisé en ce qu'**il met en oeuvre un procédé conforme à l'une quelconque des revendications 1 à 10.

**Claims**

1. Method for positioning of a moving body by combining inertial data ($\vec{u}$) with range data ($\vec{r}_m$) between the moving body and satellites,
**characterised in that**:

a) the range data are stored in a FIFO memory (10) in order to have delayed range data available at the output from the memory,
b) the delayed range data are combined with the inertial data in order to obtain an estimate ($\vec{x}$) for position data of the moving body, and
c) the appearance of a fault (DSi) in the range data is watched for, and when such a fault is detected, at least some of the data stored in the FIFO memory are modified to reduce or eliminate their weight in the combining operation.

2. Method according to Claim 1, in which estimated satellite range data ($\vec{r}$) as a function of inertial data and as a function of satellite ephemerides are stored in a second FIFO memory (13) in order to have delayed estimates available at the output from said memory, the capacities of the two FIFO memories being equivalent so that the value of the greatest delay for the delayed estimates is identical to the value of the greatest delay for the delayed range data.

3. Method according to Claim 2, in which the combining operation comprises subtracting delayed estimates of the range data as a function of the inertial data from the delayed range data, and weighting the result of this subtraction.

4. Method according to Claim 3, in which the weighting gain (K) is constant.

**5.** Method according to Claim 3, in which the weighting gain (K) is variable.

**6.** Method according to Claim 5, in which the weighting gain is calculated as a function of the a priori covariance (R) of the errors affecting the range data, and as a function of the geometry of the constellation.

**7.** Method according to any one of Claims 2 to 6, in which the value of the greatest delay is of the order of 1 to 6 seconds.

**8.** Method according to any one of Claims 1 to 7, in which the storing and combining operations are performed at regular time intervals, at a frequency of the order of at least 0.5 or 1 Hz.

**9.** Method according to Claims 7 and 8, in which each FIFO memory enables a plurality - or tens - of successive data vectors $(\hat{\vec{r}}_m, \hat{\vec{r}})$ to be stored, each range data vector $(\hat{\vec{r}}_m)$ comprising for each reception channel, i.e. for each satellite, a pseudo-range measurement together with the variance of the error affecting said measurement.

**10.** Method according to any one of Claims 1 to 9, in which in order to neutralise the data stored in the first FIFO memory, the confidence associated with said data is decreased, in particular by increasing the covariance of the errors associated with said data.

**11.** Aircraft positioning device (18) mounted or mountable on board an aircraft, which comprises:

- an inertial unit (14) delivering inertial data $(\vec{u})$,
- a unit (11) for receiving satellite ranges and ephemerides and delivering range and/or position data $(\hat{\vec{r}}_m)$ from the unit (11), and
- a hybridisation unit (12, 13, 16, 17, PFV) connected to the inertial unit to receive the inertial data and connected to the satellite range receiving unit to receive the range data, the hybridisation unit delivering estimated position data $(\hat{\vec{x}})$ as a function of the inertial data and of the range data,

the device being **characterised in that** it furthers comprises:

- a FIFO memory (10) coupled with - inserted between - the range receiving unit (11) and the hybridisation unit, to deliver delayed range data to the hybridisation unit, and
- a neutralisation unit (15) responsive to a fault datum (DSi) of the range data coming from a faulty satellite (Si), and arranged, in the presence of said fault datum, to modify at least some of the range data stored in the memory.

**12.** Device according to Claim 11, in which the hybridisation unit comprises:

- an estimating unit delivering estimated range data calculated on the basis of inertial data and estimated position data,
- a second FIFO memory (13) arranged to store the estimated range data and to output delayed estimated range data,
- a subtracting unit (16) arranged to subtract the delayed estimated range data from the delayed range data delivered by the first FIFO memory, and
- a weighting unit (17) arranged to weight the data delivered by the subtracting unit.

**13.** Device according to Claim 11 or 12, in which the hybridisation unit comprises a recursive filter (12).

**14.** Device according to Claim 13, in which the recursive filter is a Kalman filter.

**15.** Device according to any one of Claims 11 to 14, in which the neutralisation unit (15) is connected to the range receiving unit (11) to receive the fault data therefrom.

**16.** Program comprising a code usable by a computer of a moving body for positioning of the moving body by combining inertial data $(\vec{u})$ with range data $(\hat{\vec{r}}_m)$ between the moving body and satellites, **characterised in that**:

a) the range data are stored in a FIFO memory (10) in order to have delayed range data available at the output from the memory,
b) the delayed range data are combined with the inertial data in order to obtain an estimate $(\hat{\vec{x}})$ of position data of the moving body, and

c) the appearance of a fault (DSi) in the range data is watched for, and when such a fault is detected, at least some of the data stored in the FIFO memory are modified to reduce or eliminate their weight in the combining operation,

and in which estimated satellite range data ($\overset{\wedge}{\vec{r}}$) as a function of inertial data are stored in a second FIFO memory (13) in order to make delayed estimates available at the output from said memory, the capacities of the two FIFO memories being equivalent so that the value of the greatest delay for the delayed estimates is identical to the value of the greatest delay for the delayed range data.

17. Program usable by a computer of a moving body for positioning of the moving body, **characterised in that** it implements a method in accordance with any one of Claims 1 to 10.

**Patentansprüche**

1. Verfahren zur Positionierung eines beweglichen Objektes durch Kombination von Abstandsdaten ($\overset{\wedge}{\vec{r}}_m$) bezüglich des Abstands des beweglichen Objekts von Satelliten mit Inertialdaten ($\vec{u}$),
   **dadurch gekennzeichnet, dass**:

   a) in einem FIFO-Speicher (10) die Abstandsdaten registriert werden, um am Ausgang des Speichers zeitverzögerte Abstandsdaten zu erhalten,
   b) die zeitverzögerten Abstandsdaten mit den Inertialdaten kombiniert werden, um eine Abschätzung ($\overset{\wedge}{\vec{x}}$) der Positionsdaten des beweglichen Objekts zu erhalten,
   c) das Auftreten eines Fehlers (DSi) in den Abstandsdaten überwacht wird und wenn ein solcher Fehler erfasst ist, mindestens ein Teil der in dem FIFO-Speicher registrierten Daten modifiziert wird, um deren Gewicht bei der Kombinationsverarbeitung abzuschwächen oder zu annullieren.

2. Verfahren nach Anspruch 1, bei dem die Abschätzungen ($\overset{\wedge}{\vec{r}}$) der Abstandsdaten bezüglich der Abstände zu den Satelliten in Abhängigkeit von den Inertialdaten und den Ephemeriden der Satelliten in einem zweiten FIFO-Speicher (13) registriert werden, um am Ausgang dieses Speichers zeitverzögerte Abschätzungen zu erhalten, wobei die Kapazitäten der beiden FIFO-Speicher äquivalent sind, derart, dass der Wert der zeitverzögerten Abschätzungen mit der größten Zeitverzögerung mit dem Wert der größten Zeitverzögerung der zeitverzögerten Abstandsdaten identisch ist.

3. Verfahren nach Anspruch 2, bei dem das Kombinationsverfahren die Subtraktion der zeitverzögerten Abschätzungen der Abstandsdaten in Abhängigkeit von den Inertialdaten von den zeitverzögerten Abstandsdaten umfasst, sowie das Wichten des Ergebnisses dieser Subtraktion.

4. Verfahren nach Anspruch 3, bei dem der Wichtungsfaktor (K) der Wichtung konstant ist.

5. Verfahren nach Anspruch 3, bei dem der Wichtungsfaktor (K) der Wichtung variabel ist.

6. Verfahren nach Anspruch 5, bei dem der Wichtungsfaktor der Wichtung in Abhängigkeit von der ä-priorischen Covarianz (R) der Fehler, die die Abstandsdaten beeinträchtigen, und in Abhängigkeit von der Geometrie der Konstellation berechnet wird.

7. Verfahren nach einem der Ansprüche 2 bis 6, bei dem der Wert mit der größten Zeitverzögerung von der Größenordnung 1 bis 6 Sekunden ist.

8. Verfahren nach einem der Ansprüche 1 bis 7, bei dem die Registrierungs- und Kombinationsschritte in gleich großen Zeitintervallen ausgeführt werden, mit einer Frequenz der Größenordnung von mindestens 0,5 bis 1 Hz.

9. Verfahren nach einem der Ansprüche 7 und 8, bei dem jeder FIFO-Speicher es ermöglicht, mehrere Vektoren oder Zehnerbündel von aufeinanderfolgenden Vektoren der Daten ($\overset{\wedge}{\vec{r}}_m$, $\overset{\wedge}{\vec{r}}$) zu registrieren, wobei jeder Vektor ($\overset{\wedge}{\vec{r}}_m$) der Abstandsdaten für jeden Empfangskanal, d.h. jeden Satelliten einen Messwert eines Pseudoabstands aufweist sowie die Varianz des Fehlers, der diesen Messwert beeinträchtigt.

10. Verfahren nach einem der Ansprüche 1 bis 9, bei dem, um die in dem ersten FIFO-Speicher registrierten Daten zu neutralisieren, das Vertrauen in diese Daten vermindert wird, insbesondere durch Erhöhung der Covarianz der mit diesen Daten verbundenen Fehler.

**11.** In ein Luftfahrzeug eingebaute oder einbaubare Vorrichtung (18) zur Positionsbestimmung mit:

- einer Inertial-Einheit (14), die Inertialdaten ($\vec{u}$) bzw. Trägheitsdaten liefert,
- einer Einheit (11) zum Empfangen der Satellitenabstände und der Ephemeriden, welche Abstandsdaten und/ oder Positionsdaten ($\vec{r}_m$) der Einheit (11) liefert,
- einer Einheit (12, 13, 16, 17, PFV) zur Hybridisierung, die mit der Inertial-Einheit verbunden ist, um Inertialdaten zu empfangen und die mit der Einheit zum Empfangen der Satellitenabstände verbunden ist, um die Abstandsdaten zu empfangen, wobei die Hybridisierungseinheit Positionsdaten ($\vec{x}$) liefert, die in Abhängigkeit von den Inertialdaten und den Abstandsdaten geschätzt sind,

wobei die Vorrichtung **dadurch gekennzeichnet ist, dass** sie ferner aufweist:

- einen FIFO-Speicher (10), der mit der Einheit (11) zur Erfassung der Abstände und der Hybridisierungseinheit verbunden ist bzw. zwischen diesen Einheiten angeordnet ist, um an die Hybridisierungseinheit zeitverzögerte Abstandsdaten zu liefern, und
- eine Neutralisierungseinheit (15), die empfindlich auf einen Wert (DSi) eines Fehlers in den Abstandsdaten reagiert, die von einem fehlerhaften Satelliten (Si) abgegeben werden, und die vorgesehen ist, um bei Auftreten dieses fehlerhaften Wertes mindestens einen Teil der in dem Speicher registrierten Abstandsdaten zu modifizieren.

**12.** Vorrichtung nach Anspruch 11, bei der die Hybridisierungseinheit aufweist:

- eine Abschätzungseinheit, die abgeschätzte Entfernungsdaten liefert, die ausgehend von den Inertialdaten und den abgeschätzten Positionsdaten berechnet sind,
- einen zweiten FIFO-Speicher (13), der vorgesehen ist, um die abgeschätzten Entfernungsdaten zu registrieren und um an seinem Ausgang geschätzte zeitverzögerte Daten der Abstandsdaten zu liefern,
- eine Subtraktionseinheit (16), die vorgesehen ist, um die abgeschätzten zeitverzögerten Daten der Abstandsdaten von den zeitverzögerten Abstandsdaten, die von dem ersten FIFO-Speicher geliefert werden, zu subtrahieren, und
- eine Gewichtungseinheit (17), die vorgesehen ist, um die von der Subtraktionseinheit gelieferten Daten zu wichten.

**13.** Vorrichtung nach Anspruch 11 oder 12, bei der die Hybridisierungseinheit einen Rekursivfilter (12) aufweist.

**14.** Vorrichtung nach Anspruch 13, bei der der Rekursiv-Filter ein Kalman-Filter ist.

**15.** Vorrichtung nach einem der Ansprüche 11 bis 14, bei der die Neutralisierungseinheit (15) mit einer Einheit (11) zum Empfangen der Abstände verbunden ist zum Empfangen der Fehlerdaten.

**16.** Programm mit einem Code, der von einem Rechner eines mobilen Objektes verwendbar ist, um das mobile Objekt durch Kombination von Abstandsdaten ($\vec{r}_m$), wobei der Abstand das mobile Objekt von den Satelliten trennt, und Inertialdaten ($\vec{u}$) zu positionieren,
**dadurch gekennzeichnet, dass**:

a) in einem FIFO-Speicher (10) die Abstandsdaten registriert werden, um am Ausgang des Speichers zeitverzögerte Abstandsdaten zu erhalten,
b) die zeitverzögerten Abstandsdaten mit den Inertialdaten kombiniert werden, um eine Abschätzung ($\vec{x}$) der Positionsdaten des mobilen Objektes zu erhalten,
c) das Auftreten eines Fehlers (DSi) in den Abstandsdaten überwacht wird und, wenn ein Fehler erfasst wird, mindestens ein Teil der registrierten Daten in dem FIFO-Speicher modifiziert wird, um deren Gewicht im Kombinationsschritt zu vermindern oder zu annullieren, und Abschätzungen ($\vec{r}$) von Daten der Abstände zu den Satelliten in einem zweiten FIFO-Speicher (13) registriert werden, in Abhängigkeit von Inertialdaten, um am Ausgang dieses Speichers zeitverzögerte Abschätzungen bereitzustellen, wobei die Kapazitäten der beiden FIFO-Speicher äquivalent sind in dem Sinne, dass der Wert der größten Zeitverzögerung der zeitverzögerten Abschätzungen gleich dem Wert der größten Zeitverzögerung der zeitverzögerten Abstandsdaten ist.

17. Programm, das von einem Rechner eines mobilen Objekts verwendbar ist, um das mobile Objekt zu positionieren, **dadurch gekennzeichnet, dass** es ein Verfahren gemäß einem beliebigen der Ansprüche 1 bis 10 durchführt.

## FIG 1

## FIG 2

## FIG 3

vers estimateur lisseur

$\hat{\vec{r}}_m$

vers estimateur lisseur

| GPS-SBAS 11 |
| --- |

$R$

$XH^T (HXH^T+R)^{-1}$

$K$

$H$

(correction)

$X_{k+1|k+1}$

$D$

$X_{k|k}$

$KH$

$\times$

(prédiction)

$F\_F^T$

$X_{k+1|k}$

$B\_B^T$

$U$

12

## FIG 4

DSi

| 15 |
| --- |

| GPS-SBAS 11 |
| --- |

$R$

| 10 |
| --- |

| 12 |
| --- |

$X$

$\hat{\vec{r}}_m$

$+$

$\otimes$

$-$

$\varkappa$

$+$

$\otimes$

$+$

$D$

$\hat{\vec{x}}$

16

17

$\vec{C}$

$\hat{\vec{r}}$

| 13 |
| --- |

$H$

$\otimes$

$+$

$F$

18

$+$

$B$

$\vec{u}$

PFV

| 14 |
| --- |

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2003083792 A


**Littérature non-brevet citée dans la description**

- **Charles S. Dixon.** GNSS Local component Integrity Concepts. *Journal of Global Positioning Systems,* 2003, vol. 2 (2), 126-134